# EUROPEAN PATENT APPLICATION

(11) **EP 0 900 696 A2**
(43) Date of publication of application: **10.03.1999**
(21) Application number: 98114509.7
(22) Date of filing: 03.08.1998
(51) Int. Cl.: B60R 1/08

(54) **Outer vehicle rear view mirror**

(30) Priority: 08.09.1997 IT PR970018 U
(71) Applicant: Corradi, Corrado, 43020 Mediano (Parma) (IT)
(72) Inventor: Corradi, Corrado, 43020 Mediano (Parma) (IT)
(74) Representative: Cicogna, Franco

(57) **Abstract**

The device comprises two or more adjoining perfectly flat suitably oriented adjoining mirrors. At one end of the device a rear vision mirror is arranged, whereas, at the opposite end, a side vision mirror is provided, between the rear vision mirror and side vision mirror one or more rear-side vision mirrors being arranged.

## Description

### BACKGROUND OF THE INVENTION

The present invention relates to an outer rear-side vision device for motor vehicles providing undeformed images and unaltered distances.

Prior outer mirrors conventionally comprise rear vision mirrors and are applied to the motor vehicle respectively at a ten hour position (left rear mirror) and at a two hour position (right rear mirror) and they allow the motor vehicle driver to see the rear part of the motor vehicle inside a rear vision angle or range respectively extending from five or six hours up to seven or height hours at maximum (left rear mirror) or from seven or six hours to five or four hours (right rear mirror) without compelling the motor vehicle driver to distract his/her attention from the front vision range of the motor vehicle, i.e. at hours from ten to two.

The above mentioned rear vision devices conventionally comprise a mirror having a continuous surface, either flat or slightly curved-convex.

The convex curvature broadens, up to the above indicated maximum values, the normal rear vision angle or range which can be obtained by using flat mirrors.

However, this presents the drawback of restituting deformed images and altered distances, and this drawback increases as the curving ray decreases and/or changes and depending on the observed objects being on side or on the rear.

This drawback is very serious mainly with respect to the safety of the road traffic.

For example, the slightly curved-convex rear mirror of a motor vehicle reflects to the motor vehicle driver a nearly undeformed image, and a nearly real distance of a vehicle arranged at hour six, i.e. on the rear on the same driving lane, but, as the rear vehicle moves to a seven hour position, i.e. to a side lane in order to pass the front vehicle, the image thereof is reflected with an ovalized configuration, and the distance thereof is increased with respect to the real distance.

Moreover, as the rear vehicle achieves a position corresponding to about eight hour, during the overtaking operation proper, the image thereof will appear much more ovalized and distant, thereby exiting the vision angle or range of the rear mirror.

Thus, for continuously seeing the overtaking vehicle, and for properly controlling the position of his/her vehicle, the driver is compelled to remove his/her eyes from the rear mirror for directly observing the overtaking vehicle; in other words, the driver must distract his/her eyes from the road, to achieve a eight hour position, which would inevitably increase the risk of an accident.

In this connection it should be pointed out that small curved-convex mirrors are at present available, suitable to be glued or otherwise applied to conventional rear mirrors in order to increase their vision angle or range.

However, these additional curved-convex mirrors, are also affected by the above mentioned drawbacks.

In order to overcome said drawbacks, simple rear vision or side vision mirrors are also known, comprising a single mirror element having a continuous flat surface or a continuous slightly convex surface.

However, these latter devices too are specifically designed for allowing a truck driver to see a given region of the truck (for example the front corner of the bumper of the truck side opposite to the driving side), as the truck is, for example, manoeuvred near buildings, said devices not allowing to see other motor vehicles coming from the rear or driven on a side in normal road traffic conditions.

### SUMMARY OF THE INVENTION

Accordingly, the aim of the present invention is to allow a motor vehicle driver to properly see objects arranged on the rear or on a side of the motor vehicle, without deforming the shape and distance thereof, by an outer rear-side vision device, as well as to see objects on the front of the vehicle.

According to the invention, the above aim is achieved by a rear-side vision device for a motor vehicle, in particular a truck, comprising a holding casing adapted to be coupled to said motor vehicle, characterized in that said device further comprises at least two elementary mirrors adjoining one another and suitably angled with respect to one another, in order to eliminate any overlapping or dead regions between the vision ranges of said two mirrors.

According to a preferred embodiment of the present invention, the motor vehicle rear-side vision device according to the invention comprises at least a first hinge, allowing to change the orienting angle of one of the elementary mirrors with respect to the adjoining elementary mirror.

According to a further preferred embodiment of the present invention, the first mirror of said elementary mirrors is a rear mirror, whereas the second mirror of said elementary mirrors is a side mirror, said side mirror overlapping said rear mirror.

Moreover, the device according to the invention can also comprise a second hinge allowing to change the orienting of the elementary mirror assembly with respect to the mentioned casing.

According to a further preferred embodiment of the present invention, the side vision mirror and the rear vision mirror are housed in different holding casings.

According to another preferred embodiment of the present invention, the first hinge, for changing the orienting angle of one of the elementary mirrors with respect to the adjoining elementary mirror, is arranged on the middle vertical axis of the elementary mirror assembly.

According to yet another embodiment of the present invention, the first hinge is arranged on a side of the vertical middle axis of the elementary mirror assembly.

According to yet a further modified embodiment of the present invention, the first elementary mirror is a rear mirror and the second elementary mirror is a side mirror, wherein said side mirror and rear mirror are arranged adjoining one another in a horizontal direction, and are connected to one another by said first hinge, for changing the orienting angle of said two elementary mirrors, arranged near their vertical crossing axis.

According to a modified embodiment of the present invention, the motor vehicle rear-side vision device comprises three elementary mirrors, adjoining one another in a horizontal direction, wherein the first elementary mirror is a rear mirror, the second elementary mirror is a rear-side mirror and the third elementary mirror is a side mirror, and wherein the adjoining elementary mirrors are coupled to one another by vertical hinges.

By this device, the driver of a motor vehicle can see, for example, on the elementary rear mirror the instantaneous image of other vehicles coming from the rear, on other elementary rear-side mirrors the vehicles preparing for overtaking, and on the elementary side mirror the overtaking vehicles; the driver being capable of following the sequential elementary mirrors from the rear mirror to the side mirror, thereby obtaining a kinematic image of a vehicle which at first approaches from the rear, starts to overtake and performs the overtaking operation proper.

### BRIEF DESCRIPTION OF THE DRAWINGS

The above and other features will become more apparent hereinafter from the following disclosure of some preferred embodiments of the invention, which are illustrated, by way of a merely exemplary and not limitative example, in the accompanying drawings, where:

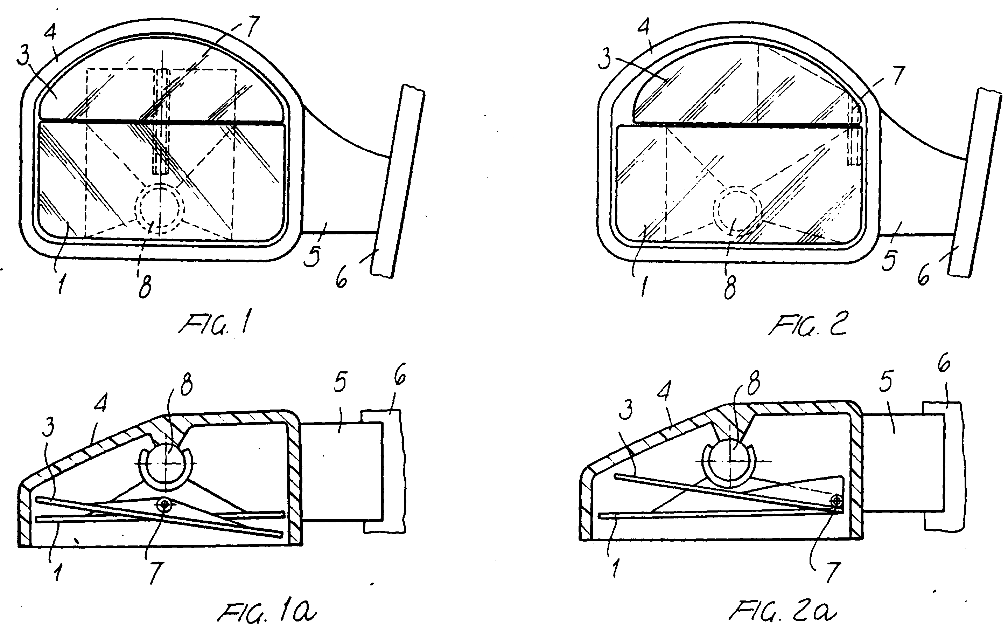

Figure 1 is an elevation view illustrating a rear-side vision device including two overlapping elementary mirrors, the bottom mirror being a rear mirror and the top mirror being a side mirror, said elementary mirrors being coupled to one another by a vertical flat hinge arranged on the vertical middle axis thereof, the mirror assembly being coupled by a ball hinge, also arranged on said axis to the aerodynamic casing and then, through an anchoring support, to the motor vehicle body;
Figure 1a is a top plan, cross-sectional, view illustrating the rear-side vision device shown in Figure 1;
Figure 2 is an elevation view illustrating a rear-side vision device similar to the preceding device, in which, however, between the two elementary mirrors a hinge is arranged laterally thereof;
Figure 2a is a top plan, cross-sectional, view illustrating the rear-side vision device shown in Figure 2;

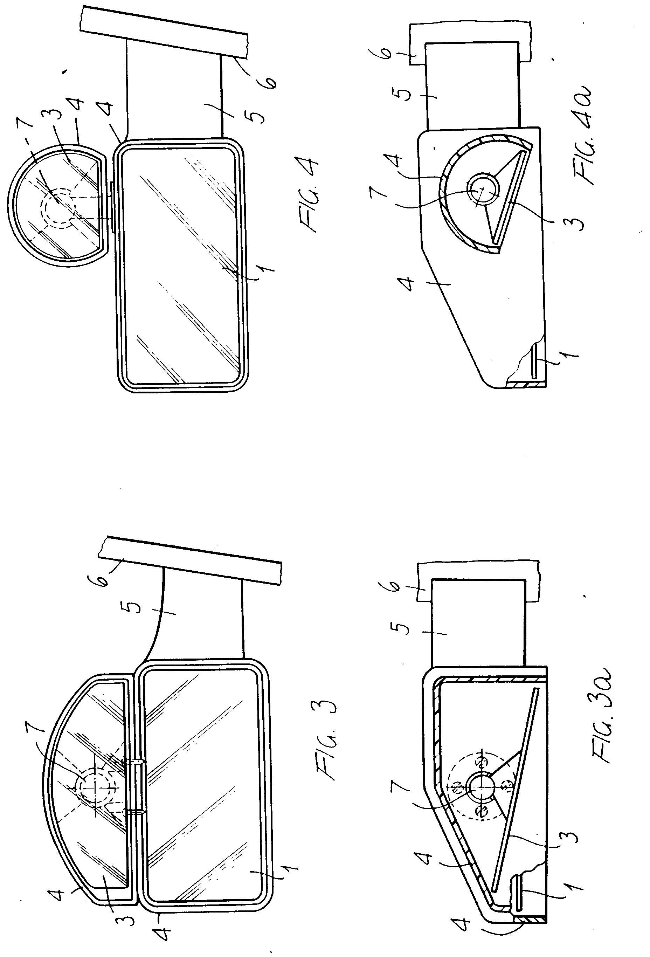

Figure 3 is an elevation view illustrating a rear-side vision device operatively identical to the preceding device, and made by applying an elementary side mirror to a conventional rear mirror;
Figure 3a is a top plan, cross-sectional, view illustrating the rear-side vision device shown in Figure 3;
Figure 4 is an elevation view illustrating a rear-side vision device, analogous to the device of Figures 3 and 3a, also made by applying an elementary side mirror to a conventional rear mirror;
Figure 4a is a top plan, cross-sectional, view illustrating the rear-side vision device of Figure 4;

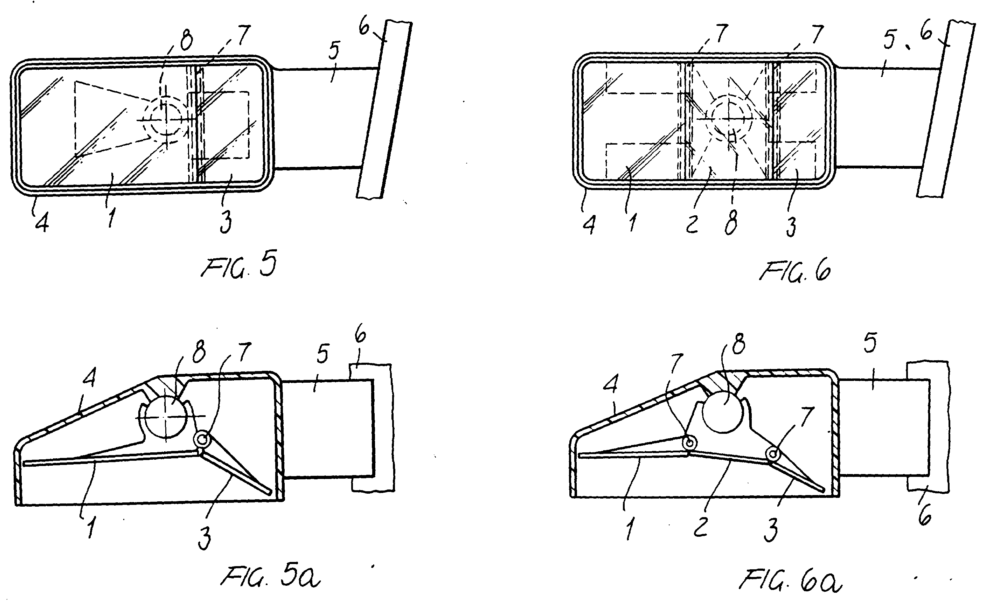

Figure 5 is an elevation view illustrating a rear-side vision device including two elementary mirrors arranged laterally of one another in a horizontal direction, the outer rear mirror and the inner side mirror-being coupled to one another by a vertical flat hinge arranged near the vertical crossing axis of said mirrors, the mirror assembly being coupled, by a ball hinge arranged on the middle axis, to the aerodynamic casing and then, through an anchoring support, to the vehicle body;
Figure 5a is a top plan, cross-sectional, view illustrating the rear-side vision device of Figure 5;

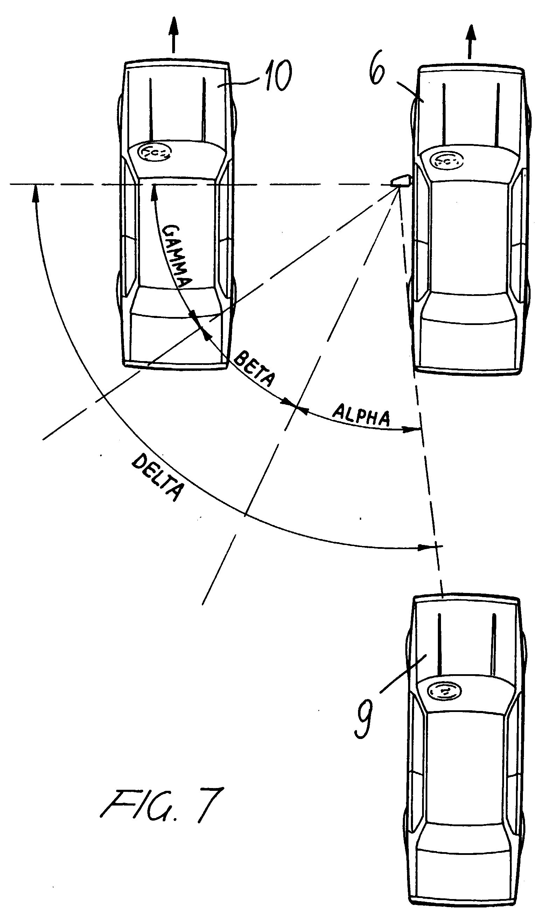

Figure 6 is an elevation view illustrating a rear-side vision device similar to that of Figure 5 and 5a, but including three elementary mirrors arranged laterally of one another in a horizontal direction, the outer mirror being a rear mirror, the middle mirror being a rear-side mirror and the inner mirror being a side mirror;
Figure 6a is a top plan, cross-sectional, view illustrating the rear-side vision device shown in Figure 6;
Figure 7 is a top plan view illustrating an arrangement and operating diagram of the device shown in Figure 6 and 6a, being clearly shown herein the vision angle or range of each elementary mirror and the vision angle or range of the mirror assembly.

### DESCRIPTION OF THE PREFERRED EMBODIMENTS

With reference to the above figures, the reference number 1 shows the rear elementary mirror, the reference 2 further rear-side vision mirror/mirrors, the reference number 3 an elementary side mirror, the reference number 4 an aerodynamic casing, the reference number 5 the anchoring support for anchoring the casing to the motor vehicle body, the reference number 6 the portion of the vehicle on which the device is mounted, the reference number 7 a hinge, either flat or spherical, arramged between two elementary adjoining mirrors, the reference number 8 the spherical or ball hinge between the mirror assembly and the aerodynamic casing 4 or the vehicle anchoring support 5, the wordALPHA indicating the vision angle or range-field of the elementary rear mirror 1, the word BETA indicating the vision angle or range of the rear-side elementary mirror 2, the word GAMMA the vision48Hangler range of the side elementary mirror 3, the word DELTA the vision angle or range of the mirror assembly, the reference number 9 a motor vehicle arranged at a six (6) hour position, and the reference number 10 a motor vehicle arranged at a nine (9) hour position.

The mirror assembly, comprising two or more elementary mirrors, can be coupled to the fixed aerodynamic casing 4 or to the vehicle body 6 anchoring support 5 by the ball hinge, and it can be oriented by directly operating it or by a remote control device from the inside of the motor vehicle.

Each elementary mirror is in turn coupled to the adjoining elementary mirror by hinges 7 which can be either flat hinges or ball hinges, the orienting of said elementary mirror being provided by directly acting thereon or by controlling it by a remote control device.

The outer rear-side vision device according to the invention will allow a motor vehicle driver to see, without any deformations of the image and any alterations of the distances, an object on the rear of the vehicle and on the side thereof, within a rear-side vision angle or range, extending from five (5) or six (6) hours to about nine (9) hours, left rear-side mirror), or from seven (7) or six (6) hours to about three (3) hours (right rear-side mirror).

Thus, the device according to the invention operates owing to the provision of the mirror assembly including the elementary mirrors 1, 3 and possibly 2, which can be oriented at will with respect to the motor vehicle body 6 anchoring support 5 and accordingly with respect to the driver, by a spherical or ball hinge 8 which is either directly controlled or remotely controlled.

The elementary mirrors 1, 2 and 3, constituting the mirror assembly, can be perfectly flat, and arranged adjoining one another in a vertical direction, in a horizontal direction or if desired in a slanted direction.

Each of said mirrors can be oriented with respect to its adjoining mirror by a flat hinge having a vertical or slanted axis, or a ball hinge 7, thereby the elementary mirror 1 arranged at one end of the mirror assembly will be a rear mirror, the mirror 3 arranged at the opposite end of the mirror assembly will be a side mirror, and the middle mirrors 2 will be rear-side mirrors thereby eliminating any overlappings or dead regions between the vision angle or range of a said mirror and that of the adjoining elementary mirrors.

Each of said elementary mirrors 1, 2 or 3 can also have a slightly curved, convex configuration, with a constant or differentiated curving ray, and so sized as to not greatly deform the provided images or distances.

The flat or ball hinge 7 arranged between two adjoining elementary mirrors can also be located at any desired regions of the device and it can have any desired configurations.

According to a possible modified embodiment of the invention, not shown, the mirror assembly comprised several separated elementary mirrors, coupled to one another without any degrees of freedom, according to set slanted configurations, for example by glueing the elementary mirrors, or it can comprise a sole mirror bent into several suitably slanted flat portions.

The mirror assembly 1+2+3, accordingly, can also comprise a rigid body, i.e. without any inner degrees of freedom, for example by glueing to one another the elementary mirrors forming it, and by mirrors suitably slanting said component with respect to one another, or by making the mirror assembly as a single-piece suitably bent into several flat mirror regions, said elementary mirrors or mirror region having any desired orientations and operations.

One or more of the mirrors 1, 2 or 3 can be coupled to the casing 4 or to the anchoring support 5 either with or without degrees of freedom, as above illustrated.

In this connection, it should be apparent that each of the above disclosed rear-side vision devices can also be applied in the inside of the motor vehicle.

## Claims

1. A rear-side vision device for a vehicle, including at least an holding casing, coupled to said motor vehicle, characterized in that said device comprises moreover at least two elementary mirrors adjoining one another and angled with respect to one another, thereby eliminating any overlapping or dead regions between the vision ranges of said mirrors.

2. A device according to Claim 1, wherein said device comprises at least a first hinge provided for changing an orienting angle of one of said elementary mirrors with respect to an adjoining elementary mirror.

3. A device according to Claim 2, wherein a first of said elementary mirror is a rear mirror and a second of said elementary mirror is a side mirror, said side mirror overlapping said rear mirror.

4. A device according to Claim 3, wherein said device comprise a second hinge for changing the orienting of said elementary mirrors with respect to said casing.

5. A device according to Claim 3, wherein said side mirror and said rear mirror are housed in different holding casings.

6. A device according to Claim 4 or 5, wherein said first hinge for changing the orienting angle of one of said elementary mirrors with respect to an adjoining elementary mirror, is arranged on a vertical middle axis of said elementary mirrors.

7. A device according to Claim 4 or 5, wherein said first hinge for changing the orienting angle of one of said adjoining elementary mirror is arranged laterally of a vertical middle axis of said elementary mirrors

8. A device according to Claim 2, wherein said first elementary mirror is a rear mirror and said second elementary mirror is a side mirror, said side mirror and said rear mirror being arranged adjoining one another in a horizontal direction, and being coupled to one another by said first hinge for changing said orienting angle of said two elementary mirrors, said hinge being arranged near a vertical crossing axis of said elementary mirrors.

9. A device according to Claim 2, wherein said device comprises three elementary mirrors, adjoining one another in a horizontal direction, a first of said elementary mirrors being a rear mirror, a second of said elementary mirrors being a rear-side mirror and a third of said elementary mirrors being provided with hinges, each of said hinges being adapted to change an orienting angle of two adjoining elementary mirrors.

10. A device according to one or more of the preceding Claims, wherein at least one of said elementary mirrors is slightly convex.
